# EUROPEAN PATENT SPECIFICATION

(11) **EP 0 661 519 B1**
(45) Date of publication and mention of the grant of the patent: **04.08.1999**
(21) Application number: 94309749.3
(22) Date of filing: 23.12.1994
(51) Int. Cl.: G01C 1/04, G01C 15/00, G01S 17/02

(54) **Surveying instrument**
Geodätisches Instrument
Instrument d'arpentage

(30) Priority: 28.12.1993 JP 34973393
(43) Date of publication of application: 05.07.1995
(60) Divisional application: 98201853.3
(73) Proprietor: KABUSHIKI KAISHA TOPCON, Tokyo-to (JP)
(72) Inventor: Sasaki, Tsuneo, deceased (JP); Ohtomo, Fumio, c/o K. K. Topcon, Tokyo-to (JP)
(74) Representative: Maggs, Michael Norman

(56) References cited:
- WO-A-90/12284
- GB-A- 2 018 422
- GB-A- 2 231 222
- US-A- 5 216 480
- PATENT ABSTRACTS OF JAPAN vol. 14, no. 207 (P-1043) 26 April 1990 & JP-A-02 045 711 (NTT) 15 February 1990

## Description

The present invention relates to a surveying instrument, and in particular to a surveying instrument by which it is possible accurately and easily to determine an angle of displacement of a telescope of the instrument whilst it is rotating.

When measuring distances or angles, the optical axis of the surveying instrument telescope must be aligned with the centre of the target. Both distance measurements and vertical or horizontal angle measurements may be affected by the accuracy of the alignment.

In a conventional surveying instrument, when the optical axis of the telescope is to be aligned with the centre of a target, a surveyor first uses the telescope to collimate, then adjusts the vertical angle adjusting mechanism of the telescope and the horizontal direction adjusting mechanism of the telescope using the telescope adjustment mechanisms in order to align a reticle of the telescope with the target to be measured. At a position where the surveyor judges that these are aligned with each other, the distance and angle are electronically read out, and the value is displayed on a display unit.

In the conventional method as described above, accuracy varies according to differences between individual surveyors. Even when measurements are by the same surveyor, there may be variations in alignment accuracy due to survey adjustments. Furthermore, when the target is a long distance away, it is often difficult accurately to identify the centre of the target. When adjusting the vertical angle adjusting mechanism, and the horizontal direction adjusting mechanism, it is necessary to lock and unlock a locking device, and repeatedly to perform fine adjustment; this leads to complicated procedures and requires much time.

US-A-5,216,480 shows a surveying instrument with a telescope, a solid state image sensor for receiving the telescope image, an emitter for emitting light towards a target, and a controller for detecting the position of the centre of the target on the sensor from the image stored in memory.

GB-A-2,018,422 discloses a mark detecting system using an image pickup device such as a TV camera in which a mark in the form of a regressive reflector is provided on an object. The device is typically used in a position control system such as that used in cargo handling.

GB-A-2,231,222 discloses a method of axis harmonisation in which a test mark is projected into an optronic sensor for a short time on top of an image of the observed scene. Subtraction from an image without the test mark is used to isolate the mark from interference produced in the observed scene.

None of the above art deals with the problem of determining an angle of displacement of a telescope incorporated in and used to align the instrument with a target whilst the instrument is rotating.

According to the invention, there is provided a survey instrument comprising a telescope mounted for rotation about a horizontal or vertical axis, or both, and alignable along an optical axis with a target to be viewed, a solid state image sensor arranged to receive an image from the telescope, an angle detector for detecting the angle of the telescope relative to a horizontal or vertical plane, or both, an emitter for emitting a flash of light towards the said target, a memory for memorising images received from the telescope by the image sensor, and a controller for calculating an angular displacement of the telescope relative to said axis, wherein the controller is adapted to calculate the angle of displacement of the telescope from the angle or angles measured by the angle detector when the emitter (6) is on and the telescope is in the first of two different angular positions about its rotational axis, and when the emitter is off and the telescope is in a second angular position about that axis, to shift one of the images produced by the telescope in one of said two positions to offset the difference in the angular positions of the telescope when the emitter is on and when it is off, and to detect the centre of the target by using the difference in the position on the sensor (4) of the shifted image and the other, non-shifted image.

The telescope is mounted for rotation about a vertical or horizontal axis or both. This may be achieved by mounting it centrally of vertical and a horizontal shaft, for example by means of trunnion bearings.

User-notification means may be arranged to alert a user of the instrument when the horizontal angle and the vertical angle of the position of the target are obtained. Similar, or the same, user-notification means may be provided to alert a user of the instrument when the optical axis of the telescope is aligned with the centre of the target. Such user-notification means may comprise an audible or visual alarm

The invention may be carried into practice in a number of ways, and one specific embodiment will now be described, by way of example, with reference to the accompanying drawings, in which:
Figure 1 illustrates schematically the optical arrangement of a telescopic viewfinder of a surveying instrument as may be used in the present invention;
Figure 2 shows various options in the operation of an instrument incorporating the arrangement of Figure 1 ; the operation described with reference to Figure 2C being an operation in accordance with the present invention; Figures 2A and 1B, which describe an alternative manner of operation not in accordance with the invention as claimed, are provided by way of explanation and to assist the understanding of the modified manner of operation shown in Figure 2C;
Figure 3 shows the relationship between the deviation of a solid state image sensor and an angle corresponding to the deviation of the telescope from a desired axis; and
Figure 4 is a block diagram of the control circuit utilised in the embodiment of Figure 1.

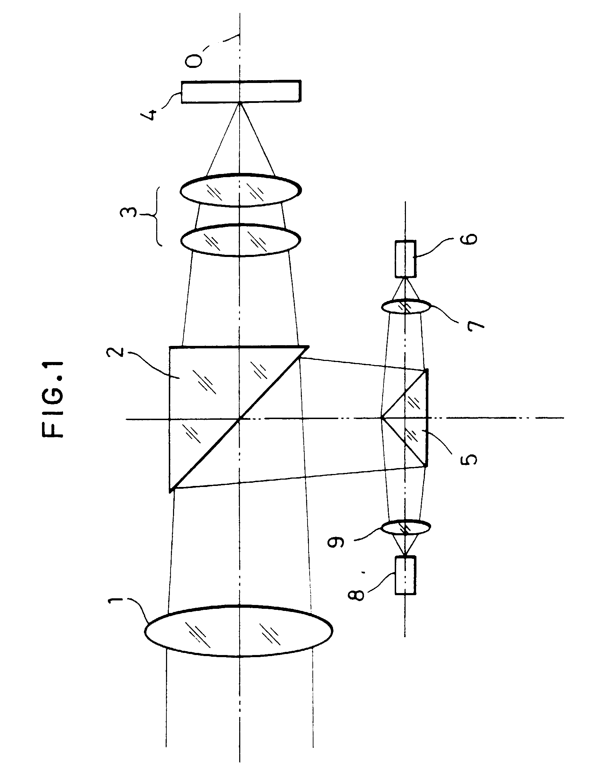

Referring to the drawings, Figure 1 shows the main parts of a telescopic view finder of a surveying instrument according to the invention, and in which an objective lens 1 a dichroic mirror 2 for almost complete reflection of infra-red light, a condenser lens 3 and a solid state image sensor, such as a CCD, are arranged along an optical axis O. A triangular-shaped mirror 5 is arranged in the position shown and in which it faces the dichroic mirror 2. In parallel with the optical axis O of the telescope, and with the triangular mirror 5 at the centre, there is a further group of devices comprising an emitter 6 for emitting flashes of modulated light ( for example, near infra-red light) and a condenser lens 7 on one side of the mirror 5 and light receiving element 8 and a further condenser lens 9 on the other.

An operation of the embodiment of Figure 1 lying outside the scope of the present claims will now be described by way of introduction and explanation.

Light emitted from the emitter 6 is reflected onto the triangular mirror 5 and the dichroic mirror 2. After passing through the objective lens 1, the beam is directed to a target prism (not shown). After reflection from the target prism, the returning light passes along the same route back to the dichroic mirror 2, from where it is reflected to the triangular mirror 5 and through the condenser lens 9 to be focused onto the light receiving element 8. Part of the returning light is transmitted through the dichroic mirror 2 and after passing through the condenser lens 3 , it is projected onto the solid state image sensor 4.

From the phase difference between the outgoing or emitted light, and the incoming or returning light, the distance is determined.

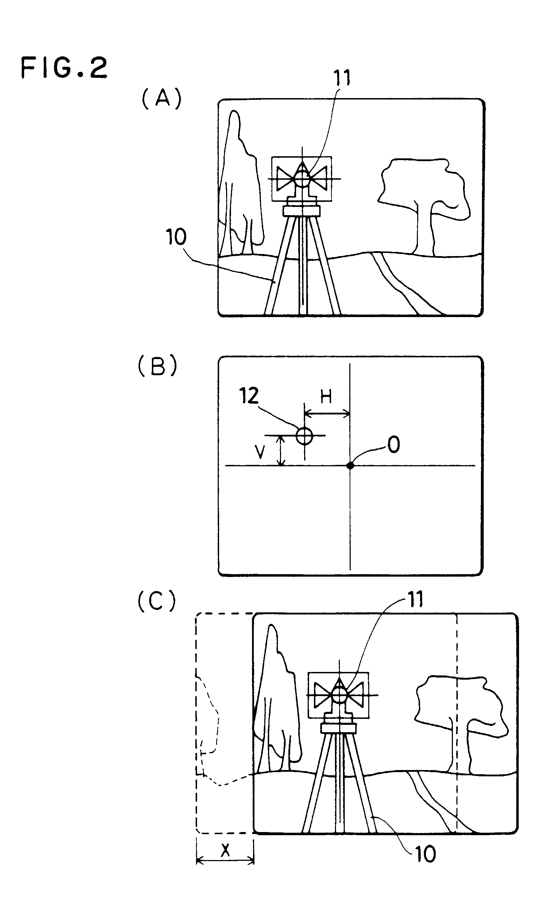

Visible light returning through the objective lens 1 passes through the dichroic mirror and is condensed by the condenser lens 3 and imaged onto the solid state image sensor 4. The image is then displayed on a display unit such as a liquid crystal monitor, a CRT, or any other suitable device, as shown in Figure 2.

Figure 2(A) shows a target prism 11 on a tripod 10, along with the surroundings. When the emitter 6 is emitting light, an image of the returning light from the target prism is formed in addition to, and overlapping, that of the visible light. Accordingly, if differences are obtained between the image when the emitter 6 is turned on and the image when it is turned off, an image formed only by the reflected/returning light 12 is obtained. As shown in Figure 2 (B) this image is approximately the same size as the target prism 11 from which it comes.

Supposing that the centre of the screen is a point aligned with the optical axis **O**, the horizontal deviation **H** and the vertical deviation **V** of the reflected/returning light 12 can easily be calculated based upon the position of the image. By shifting the optical axis of the telescope by H in the horizontal direction and by V in the vertical direction, the optical axis of the telescope can be aligned with the target prism 11.

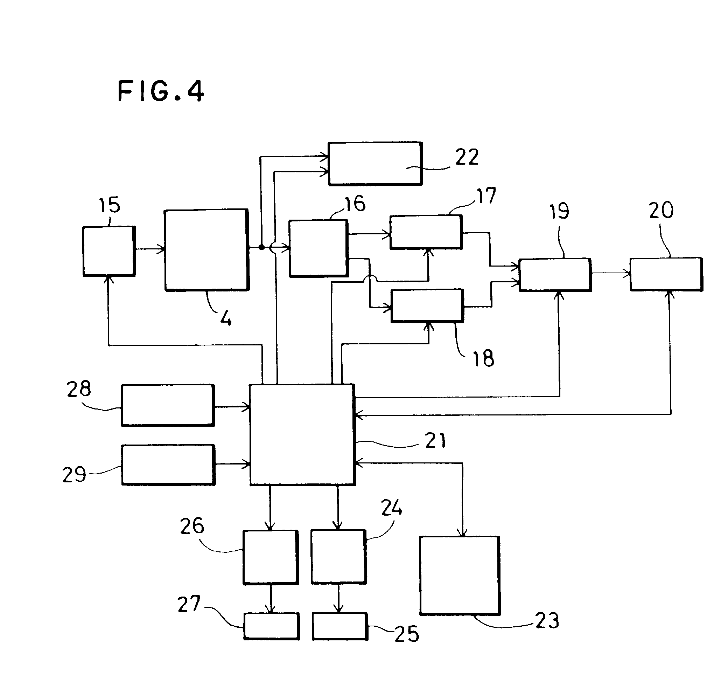

Next, a description will be given of the surveying controller, referring now to Figure 4.

At a given position along the optical axis **O**, there is an electronic shutter 15. Incident light coming from the objective lens 1 passes through the electronic shutter 15 and forms an image on the solid state image sensor 4. Connected to the solid state image sensor 4 there is an A/D converter 16 and a display unit 22. A first memory 17 and a second memory 18 are connected to the A/D converter 16, and a subtraction circuit 19 and a third memory 20 are serially connected to the first and second memories 17,18.

A computing unit 21 is connected to the electronic shutter 15, the first memory 17, the second memory 18, the subtraction circuit 19, the third memory 20 and the display unit 22. To the computing unit 21 there is connected a distance measuring circuit 23, a vertical drive controller 24 and a horizontal drive controller 26. The vertical drive controller 24 is arranged to drive a vertical motor 25; the horizontal drive controller is arranged to drive a horizontal motor 27. There is also a vertical encoder 28 for measuring the vertical angle and a horizontal encoder 29 for measuring the horizontal angle. These are provided on the optical axis of the telescope, and signals from the vertical and horizontal encoders 28,29 are fed into the computing unit 21.

A description will now be given of the operation of the controller of Figure 4.

The distance measuring circuit 23 includes the emitter 6 and the light receiving element 8. Distance is calculated, as previously mentioned, from the phase difference between the outgoing (emitted) light and the incoming (returning) light. The results of the calculation are displayed on the display unit 22 after being processed by the computing unit 21.

Incident light coming from the objective lens 1 forms an image on the solid state image sensor 4, the sensor providing photoelectric conversion. The image signal from the sensor 4 is then converted into a digital signal by the A/D converter 16 and then, by a synchronizing/timing signal from the computing unit 21 synchronized with the flashing of the emitter 6 in the distance measuring circuit 23, the image signal when the emitter is turned on is memorised in the first memory and the image signal when the imager is turned off is memorised in the second memory.

The subtraction circuit 19 then determines the difference between the two stored images, and this difference is sent to the third memory 20. The image signal 20 which is memorised in the third memory 20 corresponds to the image shown in Figure 2(B). Based upon this image data, the computing unit 21 calculates the horizontal deviation H and the vertical deviation **V** of the centre of the reflected/returning light 12 from the optical axis **O**.

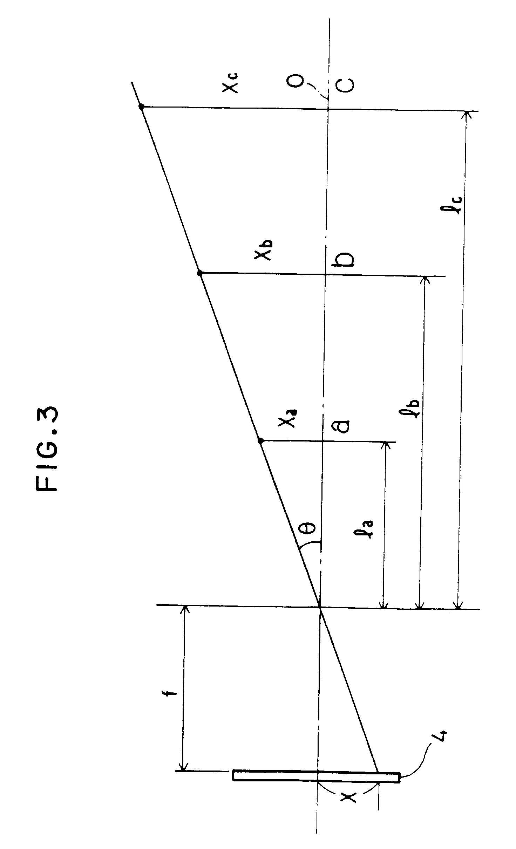

As shown in Figure 3, let it be supposed that the solid state image sensor 4 is located at the focal length **F** of the lens, and that the angle of the reflected/returning light 12 entering the solid state image sensor is θ. The deviation **X** from the optical axis **O** on the sensor 4 is then **f** tan θ. By obtaining the deviation **X**, the rotational angle required for adjustment of the telescope is unambiguously determined. Accordingly, regardless of the distance 1(A), 1(B) or 1(C) to the target prism 11, the horizontal angle and the vertical angle necessary for correction of the telescope can be obtained by calculating the horizontal deviation **H** and the vertical deviation **V** on the image.

Once the horizontal deviation **H** and the vertical deviation **V** have been calculated, the computing unit 21 drives the vertical motor 25 and the horizontal motor 27 via the horizontal and vertical drive controllers 26, 24, so that the centre of the reflected/returning light 12 is aligned with the optical axis **O**.

The computing unit 21 can calculate the horizontal deviation **H** and the vertical deviation **V** as angular values.

As described above, the vertical angle of the telescope optical axis is input by the vertical encoder 28 to the computing unit 21, and the horizontal angle is input by the horizontal encoder 29 to the computing unit 21. Based on the horizontal and vertical angles, as well as the deviations **V** and **H**, the horizontal and vertical angles of the position of the centre of the target are obtained, and are displayed on the display unit 22.

Accordingly, based upon the horizontal angle, the vertical angle obtained in relation to the deviation and angle of the optical axis **O**, it is also possible to determine the horizontal angle and the vertical angle of the position of the centre of the target, even without aligning the optical axis **O** with the centre of the target.

As described above, the difference between the image when the emitter 6 is turned on, and the image when the emitter is turned off, is obtained while the surveying instrument main unit remains still, in order to obtain the image of the reflected/returning light from the target prism 11. It is, however, possible to obtain the image of the reflected/returning light from the target prism based on the difference between the image when the emitter is turned on and the image when the emitter is turned off when the surveying instrument main unit is rotating. This feature, which forms the basis of the present invention, will now be described in more detail.

The speed at which the image moves with respect to the surveying instrument is calculated by the computing unit 21 based on pulse signals received from the vertical encoder 28 and the horizontal encoder 29. The speed of the electronic shutter 15 is controlled and driven, as determined by the computing unit 21, at a sufficiently high speed so that the image is not blurred.

The electronic shutter is synchronised with the emitter 6. As previously indicated, the image when the emitter is turned on is memorised within the first memory 17, and the image when the emitter is turned off is memorised within the second memory 18.

An exemplary image in this particular case is shown in Figure 2(C) to which reference should now be made. Here, it is supposed for the sake of example that the surveying instrument can be rotated only around a vertical axis.

In Figure 2(C), solid lines indicate the position where the surveying instrument is moved to align the target prism with the collimation axis of the telescope; at this point, the emitter 6 is emitting light. Now, when the emitter is turned off and the image has been memorised, the surveying instrument is rotated into the position shown by the broken line. This image is then recorded. As will be seen in the Figure, there is a deviation **X** between the two images. Accordingly, if the difference between the two images is calculated, the image of the target prism 11 will also deviate by **X**; thus a differential image (the image when emitting minus the image when not emitting) cannot be obtained.

This is dealt with by determining the deviation X between the two images, and then shifting one of the two images and overlapping it with the other so that the difference can then be calculated. By counting the number of pulses issued from the horizontal encoder 29, these being produced at a time difference Δ t, the deviation X between the image memorised in the first memory and the image memorised in the second memory can easily be obtained.

The procedure to be followed after one of the images has been shifted, and the images overlapped, is exactly the same as in the case where the surveying instrument has not been rotated. A further detailed description will not accordingly be given here.

Thus, the optical axis **O** and the centre of the target prism 11 can be aligned with one another without any manual operation needing to be made by the surveyor. The positioning of the optical axis **O** with the target prism 11 is carried out automatically with reference to the secondary picture of the solid state senscr 4. As a result, it is possible to perform positioning with high accuracy, regardless of the distance between the target prism 11 and the surveying instrument.

It is possible to align the optical axis O with the centre of the target prism 11 without manual intervention by the surveyor regardless of whether the surveying instrument is stationary, or whether it is rotating.

When the centre of the prism has been aligned with the optical axis **O** of the telescope, an LED incorporated in the surveying instrument may be arranged to operate. Alternatively, a message may be displayed on the display unit 22 to inform the surveyor of the alignment of the centre of the prism with the optical axis **O** of the telescope.

If the positioning operation is to be performed intermittently or repeatedly, the telescope follows the target prism 11 even when the target prism 11 is moved by the surveyor. Thus, the target prism always falls within the visual field of the telescope, thereby extensively simplifying the operation.

In determining the horizontal and vertical angles of the centre of the target, no manual alignment is necessary before the measured value is displayed for the surveyor on the display unit 22. As a result, both working efficiency and measuring accuracy can be improved.

The optical axis **O** of the telescope is normally shown by means of a reticle line in the optical system of the telescope. In the present invention the optical axis is indicated by illuminating the reticle.

While an electronic shutter 15 is provided in the present embodiment, the shutter may be omitted if the images stored in the first memory 17 and in the second memory 18 by the computing unit 21 can be otherwise determined or limited in accordance with the flashing of the emitter 6. It is also possible to provide another emitter for target positioning, in addition to the emitter 6 previously mentioned; again, by flashing this emitter the difference between the on and off modes may be obtained.

The intensity difference between the surrounding scenery and the target prism image may be increased by making use of the electronic shutter in conjunction with an emitter of high radiation output, and also by reducing the time necessary to open the electronic shutter and synchronously turn on the emitter.

In the above embodiment, the first, second and third memories are separate; it is of course to be understood that instead a single memory could be used, having separate first, second and third storage area.

The telescope may be rotated around a vertical central shaft and/or a horizontal central shaft. Instead of using a decoder for angle detection, an angle detector using a differential transformer may be used.

## Claims

1. A survey instrument comprising a telescope mounted for rotation about a horizontal or vertical axis, or both, and alignable along an optical axis with a target to be viewed, a solid state image sensor (4) arranged to receive an image from the telescope, an angle detector for detecting the angle of the telescope relative to a horizontal or vertical plane, or both, an emitter (6) for emitting a flash of light towards the said target, a memory (17,18) for memorising images received from the telescope by the image sensor (4), and a controller for calculating an angular displacement of the telescope, characterised in that the controller is adapted to calculate the angle of displacement of the telescope from the angle or angles measured by the angle detector when the emitter (6) is on and the telescope is in the first of two different angular positions about its rotational axis, and when the emitter is off and the telescope is in a second angular position about that axis, to shift one of the images produced by the telescope in one of said two positions to offset the difference in the angular positions of the telescope when the emitter is on and when it is off, and to detect the centre of the target by using the difference in the position on the sensor (4) of the shifted image and the other, non-shifted image.

2. A surveying instrument according to claim 1, wherein the controller includes a computing unit for calculating the deviation between the centre of the target and the optical axis of the telescope.

3. A surveying instrument according to claim 2, wherein the computing unit (21) obtains a horizontal angle and a vertical angle corresponding to the position of the centre of the target based on an output of the angle detector.

4. A surveying instrument according to claim 3, including a display unit (22) for displaying the horizontal angle and the vertical angle of the position of the centre of the target, as determined by the computing unit (21).

5. A surveying instrument according to claim 3 or 4, including user-notification means arranged to alert a user of the instrument when the horizontal angle and the vertical angle of the position of the centre of the target are obtained.

6. A surveying instrument according to any one of claims 1-5, including two memories (17,18) for memorising images, whereby the time at which the images are collected is controlled, the image when the emitter (6) is on being stored in one of the memories (17) and the image when the emitter (6) is off being stored in the other memory (18).

7. A surveying instrument according to any one of claims 1-6, wherein the telescope is rotatably supported independently about a vertical axis and a horizontal axis, a motor is provided to rotate the telescope with respect to the two axes and the controller being arranged to drive the motor to eliminate a measured deviation.

8. A surveying instrument according to claim 7; including user-notification means arranged to alert a user of the instrument when an optical axis of the telescope is aligned with the centre of the target.

9. A surveying instrument according to any one of claims 1-8, wherein an electronic shutter is provided, the shutter being arranged to control the time at which the image is received by the sensor (4).

## Patentansprüche

1. Vermessungsinstrument mit einem Teleskop, das zum Drehen um eine horizontale und/oder eine vertikale Achse montiert und entlang einer optischen Achse zu einem zu betrachtenden Ziel ausrichtbar ist, ferner mit einem Festkörper-Bildsensor (4), der zum Empfang eines Bildes von dem Teleskop eingerichtet ist, einem Winkeldetektor zum Detektieren des Winkels des Teleskops relativ zu einer horizontalen und/oder einer vertikalen Ebene, einem Sender (6) zum Aussenden eines Lichtblitzes zum Ziel hin, einem Speicher (17,18) zum Speichern von Bildern, die vom Bildsensor (4) aus dem Teleskop empfangen wurden, und mit einer Steuereinrichtung zum Berechnen einer Winkelverschiebung des Teleskops, **dadurch gekennzeichnet,** daß die Steuereinrichtung dazu eingerichtet ist, den Verschiebungswinkel des Teleskops anhand des oder der Winkel zu berechnen, den (die) der Winkeldetektor mißt, wenn der Sender (6) eingeschaltet ist und das Teleskop sich in der ersten von zwei verschiedenen Winkelstellungen um seine Drehachse befindet, und wenn der Sender ausgeschaltet ist und das Teleskop sich in einer zweiten Winkelstellung um diese Achse befindet, ferner eines der von dem Teleskop in einer der beiden Stellungen erzeugten Bilder zum Ausgleich des Unterschiedes in den Winkelstellungen des Teleskops zu verschieben, bei eingeschaltetem bzw. ausgeschaltetem Sender und unter Anwendung des Unterschiedes zwischen der Position des verschobenen Bildes und der des anderen, nicht verschobenen Bildes auf dem Sensor (4) den Mittelpunkt des Ziels zu detektieren.

2. Vermessungsinstrument nach Anspruch 1, bei dem die Steuereinrichtung eine Recheneinheit zum Berechnen der Abweichung zwischen dem Mittelpunkt des Ziels und der optischen Achse des Teleskops aufweist.

3. Vermessungsinstrument nach Anspruch 2, bei dem die Recheneinheit (21) einen horizontalen Winkel und einen vertikalen Winkel, entsprechend der Position des Mittelpunktes des Ziels und auf der Basis eines Ausgangswertes des Winkeldetektors, bestimmt.

4. Vermessungsinstrument nach Anspruch 3, mit einer Anzeigeeinheit (22) zur Anzeige des horizontalen Winkels und des vertikalen Winkels der Position des Mittelpunktes des Ziels, wie sie von der Recheneinheit (21) bestimmt wurden.

5. Vermessungsinstrument nach Anspruch 3 oder 4, mit einer Benutzerbenachrichtigungseinrichtung, die dazu eingerichtet ist, einen Benutzer des Instrumentes zu benachrichtigen, sobald der horizontale Winkel und der vertikale Winkel der Position des Mittelpunktes des Ziels bestimmt wurden.

6. Vermessungsinstrument nach einem der Ansprüche 1 bis 5, mit zwei Speichern (17, 18) zum Speichern von Bildern, wobei der Zeitpunkt, zu dem die Bilder gesammelt werden, gesteuert wird und das Bild bei eingeschaltetem Sender (6) in einem der Speicher (17) bzw. das Bild bei ausgeschaltetem Sender (6) in dem anderen Speicher (18) gespeichert wird.

7. Vermessungsinstrument nach einem der Ansprüche 1 bis 6, bei dem das Teleskop unabhängig um eine vertikale Achse und um eine horizontale Achse verdrehbar gelagert ist, ferner ein Motor vorgesehen ist, um das Teleskop relativ zu den beiden Achsen zu verdrehen, und die Steuereinheit dazu eingerichtet ist, den Motor zu betätigen, um eine gemessene Abweichung auszugleichen.

8. Vermessungsinstrument nach Anspruch 7, mit einer Benutzer-Benachrichtigungseinrichtung, die dazu eingerichtet ist, einen Benutzer des Instrumentes zu benachrichtigen, sobald eine optische Achse des Teleskops mit dem Mittelpunkt des Ziels ausgerichtet ist.

9. Vermessungsinstrument nach einem der Ansprüche 1 bis 8, bei dem eine elektronische Blende vorgesehen ist, wobei diese Blende dazu eingerichtet ist, den Zeitpunkt zu steuern, zu dem das Bild von dem Sensor (4) empfangen wird.

## Revendications

1. Instrument d'arpentage comprenant un télescope monté à rotation autour d'un axe horizontal ou vertical, ou les deux, et alignable le long d'un axe optique avec une cible à observer, un capteur d'image à état solide (4) agencé pour recevoir une image du télescope, un détecteur d'angle pour détecter l'angle du télescope par rapport à un plan horizontal ou vertical, ou les deux, un émetteur (6) pour émettre un éclair de lumière vers ladite cible, une mémoire (17, 18) pour mémoriser les images reçues du télescope par le capteur d'image (4) et un dispositif de commande pour calculer un déplacement angulaire du télescope, caractérisé en ce que le dispositif de commande est à même de calculer l'angle de déplacement du télescope à partir du ou des angles mesurés par le détecteur d'angle lorsque l'émetteur (6) est en marche et que le télescope est dans la première de deux positions angulaires différentes autour de son axe de rotation et, lorsque l'émetteur est à l'arrêt et que le télescope est dans une seconde position angulaire autour dudit axe, de décaler l'une des images produites par le télescope dans l'une desdites deux positions pour décaler la différence des positions angulaires du télescope lorsque l'émetteur est en marche et lorsqu'il est à l'arrêt, et de détecter le centre de la cible en utilisant la différence de position sur le capteur (4) de l'image décalée et de l'autre image non décalée.

2. Instrument d'arpentage selon la revendication 1, dans lequel le dispositif de commande comprend une unité de calcul pour calculer la déviation entre le centre de la cible et l'axe optique du télescope.

3. Instrument d'arpentage selon la revendication 2, dans lequel l'unité de calcul (21) obtient un angle horizontal et un angle vertical correspondant à la position du centre de la cible sur la base d'une sortie du détecteur d'angle.

4. Instrument d'arpentage selon la revendication 3, comprenant une unité d'affichage (22) pour afficher l'angle horizontal et l'angle vertical de la position du centre de la cible, comme déterminé par l'unité de calcul (21).

5. Instrument d'arpentage selon la revendication 3 ou 4, comprenant un moyen de notification à l'utilisateur agencé pour alerter un utilisateur de l'instrument lorsque l'on obtient l'angle horizontal et l'angle vertical de la position du centre de la cible.

6. Instrument d'arpentage selon l'une quelconque des revendications 1 à 5, comprenant deux mémoires (17, 18) pour mémoriser des images, de manière à commander le moment où les images sont recueillies, l'image lorsque l'émetteur (6) est en marche étant stockée dans l'une (17) des mémoires et l'image lorsque l'émetteur (6) est à l'arrêt étant stockée dans l'autre mémoire (18).

7. Instrument d'arpentage selon l'une quelconque des revendications 1 à 6, dans lequel le télescope est supporté à rotation indépendamment autour d'un axe vertical et d'un axe horizontal, un moteur est prévu pour faire tourner le télescope par rapport aux deux axes et le dispositif de commande est agencé pour entraîner le moteur afin d'éliminer une déviation mesurée.

8. Instrument d'arpentage selon la revendication 7, comprenant un moyen de notification à l'utilisateur agencé pour alerter un utilisateur de l'instrument lorsqu'un axe optique du télescope est aligné avec le centre de la cible.

9. Instrument d'arpentage selon l'une quelconque des revendications 1 à 8, dans lequel il est prévu un obturateur électronique, l'obturateur étant agencé pour commander le moment auquel l'image est reçue par le capteur (4).
